# EUROPEAN PATENT SPECIFICATION

(11) **EP 2 981 229 B1**
(45) Date of publication and mention of the grant of the patent: **01.07.2020**
(21) Application number: 14716751.4
(22) Date of filing: 02.04.2014
(51) Int. Cl.: A61C 8/00, A61C 9/00, A61C 13/00, A61C 13/265, A61C 13/34

(54) **THE COMBINATION OF A PHYSICAL MODEL OF A SET OF A PATIENT'S TEETH AND AN ELONGATED IMPLANT ANALOG, AND A METHOD OF MAKING A PHYSICAL MODEL OF A SET OF TEETH**
KOMBINATION EINES PHYSIKALISCHEN MODELLS EINES PATIENTENGEBISSES MIT EINEM VERLÄNGERTEN IMPLANTATANALOG, UND VERFAHREN ZUR HERSTELLUNG EINES PHYSIKALISCHEN MODELLS EINES GEBISSES
COMBINAISON D'UN MODÈLE PHYSIQUE D'UNE DENTITION D'UN PATIENT ET D'UN ANALOGUE D'IMPLANT ALLONGÉ, ET PROCÉDÉ DE CRÉATION D'UN MODÈLE PHYSIQUE D'UNE DENTITION

(30) Priority: 04.04.2013 DK 201370186
(43) Date of publication of application: 10.02.2016
(73) Proprietor: Elos Medtech Pinol A/S, 3330 Gørløse (DK)
(72) Inventor: SCHÄRFE THOMSEN, Christian, DK-2200 Copenhagen N (DK); ANDERSEN, Henrik, DK-4050 Skibby (DK)
(74) Representative: Plougmann Vingtoft a/s
(86) International application number: PCT/DK2014/050079
(87) International publication number: WO 2014/161552

(56) References cited:
- EP-A2- 2 674 128
- EP-A2- 2 674 128
- WO-A1-2012/113407
- WO-A1-2012/113407
- WO-A1-2013/027199
- WO-A2-2011/034781
- WO-A2-2011/034781
- KR-A- 20110 083 975
- KR-A- 20110 083 975
- US-A- 4 801 264
- US-A1- 2003 162 148

## Description

### FIELD OF THE INVENTION

Finalizing a dental restoration which is subsequently fixed to an implant in the bone of a person is typically done using a physical model of the person's teeth. A method for making such a physical model of a full or partial set of the person's teeth typically involves a first step of scanning the implant region with teeth and an abutment piece inserted into the implant. This is often done using an intra-oral scanner.

The scanning is performed to obtain a three dimensional digital representation of the person's teeth, including of the implant region, following which a virtual model of the person's teeth is computer generated on the basis of this three dimensional representation, with a virtual region in the implant region representing the orientation of the implant. The physical model is then manufactured, such as by 3D-printing, on the basis of the virtual model, with a physical region that corresponds to the virtual region and having a hole representing the orientation of the implant. A so-called implant analog mating the hole is then inserted into the hole and to which the dental abutment is fixed temporarily, following which finalizing work, such as a manual modelling by application of a surface coating onto the dental abutment, is initiated for finalizing the restoration.

Modelling is performed manually in a dental laboratory, and is generally considered laborious and requiring high care to yield a dental restoration that not only matches neighbouring teeth but which also ensures that the person will keep his normal "bite", which is one reason for making a complete physical model of all the person's teeth.

### BACKGROUND OF THE INVENTION

It is a problem with the conventional solutions available that the dental staff working at the dental laboratory cannot verify that the analog is at the correct position in the model. Sometimes the analog will shift position axially in the hole and the dental staff is unable to readily verify at any time that the analog is in the correct axial position.

Document WO2013/027199 discloses dental implant replicas of customized abutment and implant analogs.

### OBJECT OF THE INVENTION

It is an object of the present invention to provide a solution to the aforementioned problem, which solution should at the same time still allow for an easy insertion of the analog into the hole, without the need to overcome high frictional forces between the hole and the elongated analog. This is in accordance with the invention achieved in that the physical model and the analog are configured to snap engage upon insertion of the analog into the hole at the desired depth, and also in that there is a peripheral or annular space between the analog and the model in the hole between the location of the snap engagement and a distal portion that together with the snap engagement defines contact areas serving to keep the analog from sideways or turning movements within the hole. On inserting the analog into the physical model the dental worker holding the model in his hand will recognise the feel of the snap engagement, and any simultaneous audible click sound resulting from the release of internal stresses in the material of the model/analog, as a signal that the analog has reached the desired position inside the hole, and the dental finalizing procedure can then be initiated with the staff knowing that the analog will not suddenly shift its position in the hole. The snap engagement may be located near one or the other end of the analog; in a preferred embodiment the snap engagement is by a radial projection of the analog engaging a peripheral groove of the physical model inside the hole.

An additional signal is made available when configuring the model and the analog such that when the analog is at the desired insertion depth an end face of the analog is flush with a base face of the physical model, and a person swiping his fingers across the base face will recognize this is a signal of the analog having reached the correct insertion depth. It is also preferred that the snap engagement is at separate locations along the periphery of the analog whereby only a local deformation of the physical model, which is typically of a material softer than that of the analog, is required on inserting the analog until the model and the analog snap into engagement.

Preferably, the analog has a face configured to rest against an internal abutment face in the hole, to prevent further axial movement of the analog in the hole.

The invention relates to a combination of an analog and a physical model according to claim 1.

The invention additionally relates to a method according to claim 10, of making the combination referred to above, comprising a series of steps involving the scanning of the person's teeth and forming the model with a through hole and providing an analog with a signalling portion suitable for providing a visual, audible or tactile signal, after which the physical model is generated, such as by 3D-printing, and the analog is inserted axially into the through hole until reaching a depth where the signalling portion gives off a signal indicate of the analog having reached the desired depth as required for the finalizing of the dental abutment. The signal is provided as a visual or tactile signal by the signalling portion being flush with a base face of the physical model.

### BRIEF DESCRIPTION OF THE FIGURES

The combination, method and analog according to the invention will now be described in more detail with regard to the accompanying figures. The figures show one way of implementing the present invention and is not to be construed as being limiting to other possible embodiments falling within the scope of the attached claim set.
Fig. 1 is a photo showing a part of a patient's gingival area,
Fig. 2 is a perspective view of one analog according to the invention,
Fig. 3 is a perspective top view of a physical model of the invention, with the analog of fig. 2 ready for insertion,
Fig. 4 is a perspective bottom view of the physical model of fig. 3, with the analog of fig. 2 mounted therein,
Fig. 5 is a top view of the physical model with the analog of fig. 2 mounted therein, and
Fig. 6 is a side cross-sectional view of the physical model with the analog of fig. 2 mounted therein.

### DETAILED DESCRIPTION OF AN EMBODIMENT

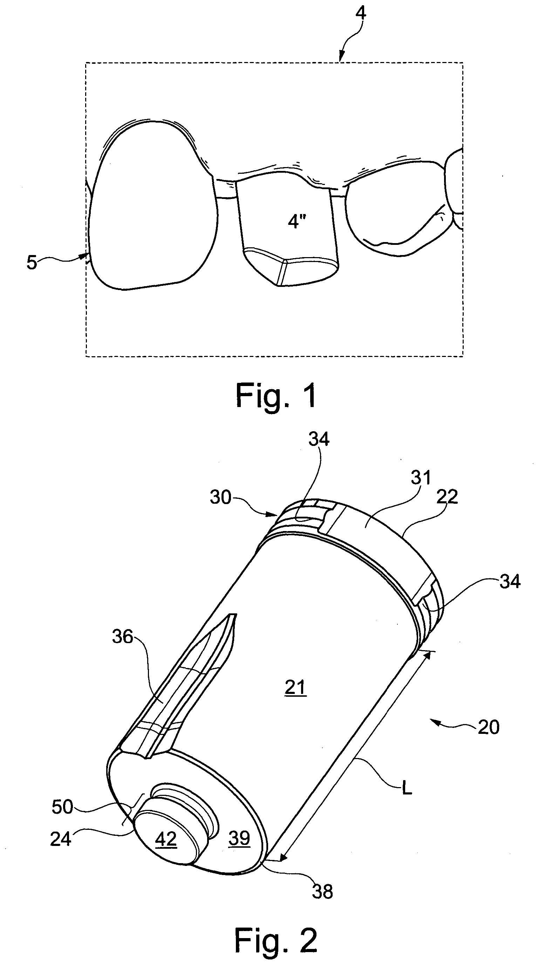

Fig. 1 shows a part of a patient's gingival area with teeth 5 and a surgically implanted implant (not shown) in an implant region 4 of the patient's bone. A scan abutment piece 4" has been mounted with one end fixed to the implant. The abutment piece 4" projects from the implant with an orientation as defined by the structure of the implant and the surgical procedure.

A method for making a physical model of a full or partial set of the patient's teeth involves a first step of scanning the implant region 4 with teeth 5 and abutment piece 4" shown in part in fig. 1. This may preferably be done using an intra-oral scanner, such as marketed by 3Shape™.

The physical model is then made and used in a dental laboratory for the purpose of finalizing a dental restoration which is subsequently fixed to the implant. For this purpose use is conventionally made of a so-called implant analog which is inserted into a hole in the physical model and to which the dental abutment is fixed temporarily, following which the aforementioned finalizing work, such as modelling, is initiated for making a restoration.

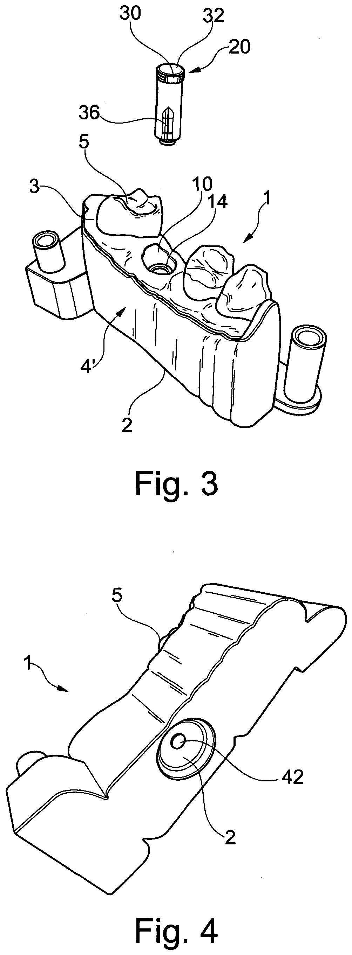

More specifically, the method of making the physical model according to the present invention involves the steps of providing an elongated cylindrical implant analog 20, as shown in fig. 2, usually of titanium and internally configured to mate with a fixture part of the dental restoration. The analog 20 has a first end 22 and a second opposite end 24. Before or after this step the above-mentioned scanning is performed to obtain a three dimensional digital representation of the person's teeth 5, including of the implant region 4, following which a virtual model of the person's teeth 5 is computer generated on the basis of this three dimensional representation, with a virtual region in the implant region representing the orientation of the implant. The physical model, as shown by way of example in fig. 3 and 4, is then manufactured, such as by 3D-printing, on the basis of the virtual model, with a physical region 4' that corresponds to the virtual region and having a hole 10 representing the orientation of the implant and mating the implant analog 20. The physical model 1 has a base face 2 and an opposite gingival region 3.

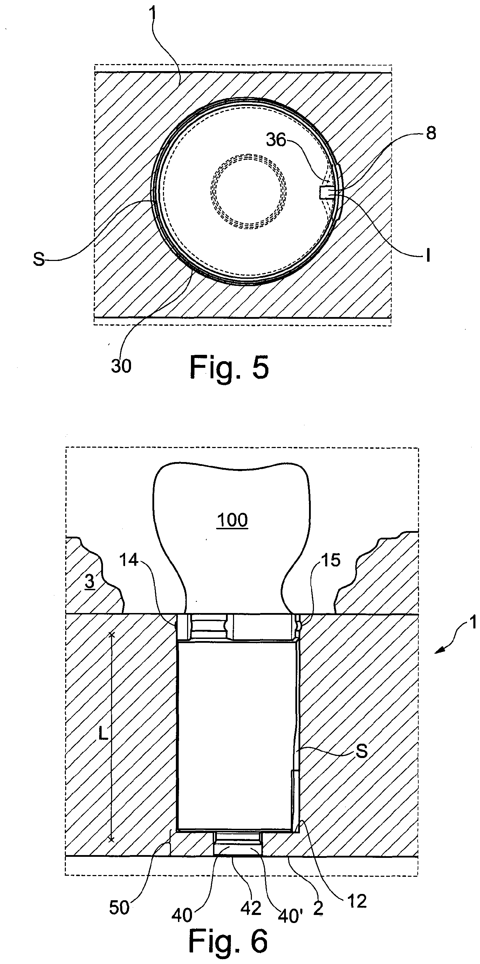

According to the invention, the hole is formed as a through hole 10 extending from the base face 2 to the opposite gingival part 3 and includes an internal abutment face 14, as seen best in fig. 6. The implant analog 20 is then inserted in the direction from the gingival part 3 into the through hole 10 to a desired depth, at which point a signalling is provided to the operator by a signalling portion of the analog 20, as described further below.

Fig. 6 is a cross-sectional side view showing the combination of the physical model 1 and the elongated implant analog inserted into the physical model 1 to simulate a dental implant. The analog 20 is hollow and internally configured to mate with a fixture part of a dental restoration 100 to be finalized using the physical model 1; the internal shape and configuration of the analog 20 is typically selected in accordance with the type of implant.

The analog 20 has a stop section 30 located between the first 22 and second 24 end and including a face 34 that is oriented in the general direction away from the first end 22, as seen also in fig. 2 and the physical model 1 is preferably manufactured with a mating internal abutment face 14 located in the through hole 10. The physical model 1 and the analog 20 are also provided with mating rotation restricting faces 8, 36, shown also in fig. 5, which engage to prevent any rotation of the analog 20 inside the hole 10 and ensure that the analog is only insertable with the correct rotational orientation to reflect the orientation of the patient's implant.

In the shown embodiment the aforementioned stop section 30 and the abutment face 14 are complementary and define a snap engagement for maintaining a desired insertion depth of the analog 20 in the hole 10. To this effect, the physical model 1 may be manufactured with an indentation that extends along the periphery of the hole 10 and defines the internal abutment face 14. The indentation receives a lateral projection on the analog 20, which projection has the face 34 and which snaps into the indentation by the material of the physical model 1 yielding slightly during the insertion of the analog 20 into the hole 10. The snap engagement is preferably only at separate discrete locations along the periphery of the analog 20, at one common level along the length of the analog 20, by the analog having intermediate areas 31 without the lateral projection, as shown in fig. 2.

As shown in fig. 6, the physical model 1 and the analog 10 are configured to provide for a peripheral annular space S between the physical model 1 and the analog 20 inside the hole along a length L, which may by way of example be in the order of 2-12 mm, of the analog 20 extending to a distal portion 40 distant from the snap engagement. The configuration is also such that only the distal portion 40 and the stop section 30 contact the physical model 1 in the hole 10 to maintain the analog 20 against sideways movement or turning inside the hole 10. This involves the advantage of a very low resistance against insertion of the analog 20 into the hole 10.

Also, the analog 20 preferably has an end portion 50 of reduced cross-section, compared to the diameter of the remaining portion of the analog 20 that includes the second end 24 and the distal portion 40. A transition to the end portion 50 is defined by a transition face 39 oriented towards the second end 24 and preferably perpendicular to the length of the analog 20. The physical model 1 preferably includes a further internal abutment face 12 in said through hole 10 and which mates the transition face 39. Preferably, when in said snap engagement the analog 20 will also rest against the internal abutment face 12 of the model 1.

Preferably, the first end 22 includes an indicator I confirming correct rotational alignment of the analog 20, i.e. that the rotation restricting faces 8, 36 are aligned and mate after the axial insertion of the analog 20 into the hole 10, by being in correspondence with a mark on the gingival part 3 of the physical model 1.

It is preferred that the end face 42 of the analog 20 at the second end 24 is visible and made to be flush with the base face 2 when the analog 20 is maintained at the desired insertion depth by the snap engagement. This is one reason for providing the hole 10 as a through-going hole. Alternatively or additionally a peripheral end face 32 at the first end 22 of the analog 20 is made to be flush with a face portion 15 of the physical model 1 surrounding the through hole 10. In this context it will be understood that the second end 24 defines a signalling portion for providing in this case a tactile signal, the user being able to manually verify correct insertion of the analog 20 by swiping a finger along the base face 2 and also visually confirming that the face 2 is flush with the end face 42. As the aforementioned projections snaps into the indentation to provide the snap engagement i) a distinct audible sound and/or ii) a tactile signal felt by a person holding the physical model 1 in his hand may alternatively or additionally be given off by proper selection of the geometry and material of the analog 20 and of the physical model 1. In this manner the snap engagement provides for another type of signalling. Again, this signal is indicative to the operator that the analog 20 is in correct position, after which work on the dental restoration 100 can be initiated without the risk that the dental abutment 100 will move during the modelling.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

## Claims

1. The combination of a physical model (1) of a set of a patient's teeth (5) and an elongated implant analog (20) for insertion into said physical model (1) to simulate a dental implant, said analog (20) having a first end (22) and a second opposite end (24) and being internally configured to mate with a fixture part of a dental restoration (100) to be finalized using said physical model (1), said analog (20) having a stop section (30) located between said first (22) and second (24) end and including a face (34) oriented away from said first end (22), said physical model (1) having a base face (2) and an opposite gingival part (3), a through-going hole (10) extending from said base face (2) to said opposite gingival part (3), said physical model (1) including an internal abutment face (14) in said through-going hole (10), and said physical model (1) and said analog (20) having mating rotation restricting faces (8, 36) restricting rotation of said analog (20) inserted into said hole (10), said stop section (30) and said abutment face (14) being complementary to define a snap engagement for maintaining a desired insertion depth of said analog (20) in said hole (10), said physical model (1) and said analog (20) being configured to provide: i) for a peripheral space (S) between said physical model (1) and said analog (20) inside said hole (10) along a length (L) of said analog (20) extending to a distal portion (40) distant from said snap engagement, and ii) for said distal portion (40) to contact said physical model (1) in said hole (10), to maintain said analog (20) against sideways movement in said hole (10);
wherein said second opposite end (24) includes a signaling portion for providing a visual, audible or tactile signal, wherein said signal is provided as a visual or tactile signal by said signaling portion being flush with said base face (2) of said physical model (1).

2. The combination according to claim 1 wherein said signal is made available when configuring said physical model (1) and said elongated implant analog (20) such that when said elongated implant analog is at said desired insertion depth an end face of the analog is flush with a base face (2) of the physical model, thereby a person swiping his fingers across the base face will recognize this as a signal of the analog having reached the correct insertion depth.

3. The combination according to any of the claims 1-2, wherein said signaling portion at said second opposite end (24) of said analog (20), provides a tactile signal inspectable at said base face (2) when an end face (42) of said analog (20) is flush with said base face (2), thereby a person swiping his fingers across the base face will recognize this as a signal of the analog having reached the correct insertion depth.

4. The combination according to of any of claims 1-3, said analog (20) having a reduced cross-section end portion (50) including said second end (24) and said distal portion (40), a transition to said end portion being defined by a transition face (39) oriented towards said second end, said physical model (1) including a further internal abutment face (12) within said through-going hole (10) and configured for mating said transition face (39).

5. The combination according to any of claims 1-4, said first end (22) and/or said second end (24) including an indicator marking I indicating when aligned with a marking on said physical model (1) proper rotational alignment of said analog.

6. The combination according to any of claims 1-5, an end face (42) of said analog (20) at said second end (24) being visible and flush with said base face (2) when said analog (20) is maintained at said desired insertion depth by said snap engagement.

7. The combination according to any of claims 1-6, said snap engagement being at separate locations along a periphery of said analog (20), such as at one common level along the length of said analog (20).

8. The combination according to any of claims 1-7, said physical model (1) being of a material softer than said analog (20).

9. The combination according to any of the previous claims, said analog (20) being of metal, such as Titanium or a metal alloy.

10. A method of making a combination of a set of patient's teeth (5) and an elongated implant analog (20) for insertion into a physical model (1) to simulate a dental implant analog, said physical model (1) being for the finalizing of a dental restoration (100) to be mounted to said implant, said physical model (1) having a base face (2) and an opposite gingival part (3), said method including the steps of:
- providing an elongated implant analog (20) internally configured to mate with a fixture part of said dental restoration (100), said implant analog (20) having a first end (22) and a second opposite end (24), said second opposite end (24) including a signaling portion for providing a visual, audible or tactile signal,
- scanning said person's teeth (5) to obtain a three dimensional representation of said person's teeth (5), including of an implant region (4) with said implant,
- generating a virtual model of said person's teeth (5) from said three dimensional representation, with a virtual region in said implant region (4) representing the orientation of said implant,
- manufacturing, such as by 3D-printing, on the basis of said virtual model said physical model (1) of said person's teeth (5), with a physical region (4') that corresponds to said virtual region and having a hole representing said orientation and mating said implant analog (20), said manufacturing comprising:
- forming said hole as a through-going hole (10) extending from said base face (2) to said opposite gingival part (3), said through-going hole (10) including an internal abutment face (14), and
- inserting said implant analog (20) in the direction from said gingival part (3) into said through-going hole (10) to a desired depth corresponding to a desired signaling by said signaling portion, wherein said signaling portion being at said second end (24) of said analog (20), wherein in said desired position an end face (42) of said analog (20) is flush with said base face (2), to provide said tactile signal inspectable at said base face (2),
wherein said elongated implant analog (20) has a stop section (30) located between said first (22) and second (24) end and including a face (34) oriented away from said first end (22), said physical model (1) having a base face (2) and an opposite gingival part (3), a through-going hole (10) extending from said base face (2) to said opposite gingival part (3),
said physical model (1) and said elongated implant analog (20) having mating rotation restricting faces (8, 36) restricting rotation of said elongated implant analog (20) inserted into said hole (10), said stop section (30) and said abutment face (14) being complementary to define a snap engagement for maintaining a desired insertion depth of said elongated implant analog (20) in said hole (10), said physical model (1) and said elongated implant analog (20) being configured to provide: i) for a peripheral space (S) between said physical model (1) and said elongated implant analog (20) inside said hole (10) along a length (L) of said elongated implant analog (20) extending to a distal portion (40) distant from said snap engagement, and ii) for said distal portion (40) to contact said physical model (1) in said hole (10), to maintain said elongated implant analog (20) against sideways movement in said hole (10).

11. The method according to claim 10, comprising the step of maintaining said desired position by a stop section (30) of said analog (20) located between said first (22) and second (24) ends snap engaging said internal abutment face (14).

12. The method according to claim 11, said snap engagement providing said audible signal.

## Patentansprüche

1. Kombination aus einem physischen Modell (1) eines Gebisses (5) eines Patienten und einem länglichen Implantatanalogon (20) zum Einsetzen in das physische Modell (1), um ein Zahnimplantat zu simulieren, wobei das Analogon (20) ein erstes Ende (22) und ein zweites gegenüberliegendes Ende (24) aufweist und intern dazu konfiguriert ist, sich mit einem Befestigungsteil eines Zahnersatzes (100) zu verbinden, der unter Verwendung des physischen Modells (1) fertigzustellen ist, wobei das Analogon (20) einen Stoppabschnitt (30) aufweist, der sich zwischen dem ersten (22) und dem zweiten (24) Ende befindet, und eine Fläche (34) beinhaltet, die von dem ersten Ende (22) weg gerichtet ist, wobei das physische Modell (1) eine Grundfläche (2) und einen gegenüberliegenden Zahnfleischteil (3) aufweist, wobei ein Durchgangsloch (10) von der Grundfläche (2) zu dem gegenüberliegenden Zahnfleischteil (3) verläuft, das physische Modell (1) beinhaltend eine innere Anstoßfläche (14) in dem Durchgangsloch (10), und wobei das physische Modell (1) und das Analogon (20) passende drehbeschränkende Vorderseiten (8, 36) aufweisen, die die Drehung des Analogons (20), das in das Loch (10) eingeführt ist, beschränken, wobei der Stoppabschnitt (30) und die Anstoßfläche (14) gegenseitig ergänzend sind, um einen Schnappeingriff zum Beibehalten einer gewünschten Einführungstiefe des Analogons (20) in das Loch (10) zu definieren, wobei das physische Modell (1) und das Analogon (20) dazu konfiguriert sind, Folgendes bereitzustellen: i) für einen umlaufenden Raum (S) zwischen dem physischen Modell (1) und dem Analogon (20) innerhalb des Lochs (10) entlang einer Länge (L) des Analogons (20), Verlaufen zu einem distalen Abschnitt (40), der von dem Schnappeingriff entfernt ist, und ii) für den distalen Abschnitt (40), das physische Modell (1) in dem Loch (10) zu berühren, um das Analogon (20) gegen Seitwärtsbewegung in dem Loch (10) zu halten;
wobei das zweite gegenüberliegende Ende (24) einen Signalisierungsabschnitt zum Bereitstellen eines sichtbaren, hörbaren oder fühlbaren Signals beinhaltet, wobei das Signal als ein sichtbares oder fühlbares Signal durch den Signalisierungsabschnitt, der mit der Grundfläche (2) des physischen Modells (1) bündig ist, bereitgestellt ist.

2. Kombination nach Anspruch 1, wobei das Signal zur Verfügung gestellt wird, wenn das physische Modell (1) und das längliche Implantatanalogon (20) konfiguriert werden, so dass, wenn sich das längliche Implantatanalogon auf der gewünschten Einführungstiefe befindet, eine Endfläche des Analogons mit einer Grundfläche (2) des physischen Modells bündig ist, wodurch eine Person, die ihre Finger über die Grundfläche bewegt, dies als ein Signal dafür erkennt, dass das Analogon die korrekte Einführungstiefe erreicht hat.

3. Kombination nach einem der Ansprüche 1-2, wobei der Signalisierungsabschnitt des zweiten gegenüberliegenden Endes (24) des Analogons (20) ein fühlbares Signal bereitstellt, das an der Grundfläche (2) nachprüfbar ist, wenn eine Endfläche (42) des Analogons (20) mit der Grundfläche (2) bündig ist, wodurch eine Person, die ihre Finger über die Grundfläche bewegt, dies als ein Signal dafür erkennt, dass das Analogon die korrekte Einführungstiefe erreicht hat.

4. Kombination nach einem der Ansprüche 1-3, wobei das Analogon (20) einen reduzierten Querschnittsendabschnitt (50) aufweist, der das zweite Ende (24) und den distalen Abschnitt (40) beinhaltet, wobei ein Übergang zu dem Endabschnitt durch eine Übergangsfläche (39) definiert ist, die in Richtung des zweiten Endes ausgerichtet ist, wobei das physische Modell (1) eine weitere innere Anstoßfläche (12) innerhalb des Durchgangslochs (10) beinhaltet, die dazu konfiguriert ist, mit der Übergangsfläche (39) zusammenzupassen.

5. Kombination nach einem der Ansprüche 1-4, wobei das erste Ende (22) und/oder das zweite Ende (24) eine Anzeigemarkierung I beinhaltet, die, wenn sie mit einer Markierung aus dem physischen Modell (1) ausgerichtet ist, eine korrekte Drehausrichtung des Analogons anzeigt.

6. Kombination nach einem der Ansprüche 1-5, wobei eine Endfläche (42) des Analogons (20) an dem zweiten Ende (24) sichtbar und mit der Grundfläche (2) bündig ist, wenn das Analogon (20) durch den Schnappeingriff auf der gewünschten Einführungstiefe gehalten wird.

7. Kombination nach einem der Ansprüche 1-6, wobei der Schnappeingriff an separaten Stellen entlang eines Umfangs des Analogons (20) vorhanden ist, wie etwa auf einer gemeinsamen Höhe entlang der Länge des Analogons (20).

8. Kombination nach einem der Ansprüche 1-7, wobei das physische Modell (1) aus einem Material besteht, das weicher als das Analogon (20) ist.

9. Kombination nach einem der vorhergehenden Ansprüche, wobei das Analogon (20) aus Metall besteht, wie etwa Titan oder einer Metalllegierung.

10. Verfahren zum Herstellen einer Kombination aus einem Gebiss (5) eines Patienten und einem länglichen Implantatanalogon (20) zum Einsetzen in ein physisches Modell (1), um ein Zahnimplantatanalogon zu simulieren, wobei das physische Modell (1) zum Fertigstellen eines Zahnersatzes (100), der an dem Implantat zu befestigen ist, dient, wobei das physische Modell (1) eine Grundfläche (2) und einen gegenüberliegenden Zahnfleischteil (3) aufweist, wobei das Verfahren die folgenden Schritte beinhaltet:
- Bereitstellen eines länglichen Implantatanalogons (20), das innen dazu konfiguriert ist, mit einem Befestigungsteil des Zahnersatzes (100) zusammenzupassen, wobei das Analogon (20) ein erstes Ende (22) und ein zweites gegenüberliegendes Ende (24) aufweist, wobei das zweite gegenüberliegende Ende (24) einen Signalisierungsabschnitt zum Bereitstellen eines sichtbaren, hörbaren oder fühlbaren Signals beinhaltet,
- Scannen der Zähne (5) der Person, um eine dreidimensionale Darstellung der Zähne (5) der Person zu erhalten, einschließlich einer Implantatregion (4) mit dem Implantat,
- Erzeugen eines virtuellen Modells der Zähne (5) der Person aus der dreidimensionalen Darstellung, wobei eine virtuelle Region in der Implantatregion (4) die Ausrichtung des Implantats darstellt,
- Herstellen, wie etwa durch 3D-Drucken, auf der Grundlage des virtuellen Modells, des physischen Modells (1) der Zähne (5) der Person mit einer physischen Region (4'), die der virtuellen Region entspricht, und mit einem Loch, das die Ausrichtung darstellt und mit dem Implantatanalogon (20) zusammenpasst, wobei das Herstellen Folgendes umfasst:
- Bilden des Lochs als ein Durchgangsloch (10), das von der Grundfläche (2) zu dem gegenüberliegenden Zahnfleischteil (3) verläuft, wobei das Durchgangsloch (10) eine innere Anstoßfläche (14) beinhaltet, und
- Einführen des Implantatanalogons (20) in der Richtung von dem Zahnfleischteil (3) in das Durchgangsloch (10) bis auf eine gewünschte Tiefe entsprechend einer gewünschten Signalisierung durch den Signalisierungsabschnitt, wobei der Signalisierungsabschnitt an einem zweiten Ende (24) des Analogons (20) liegt, wobei in der gewünschten Position eine Endfläche (42) des Analogons (20) mit der Grundfläche (2) bündig ist, um das fühlbare Signal, das an der Grundfläche (2) nachprüfbar ist, bereitzustellen,
wobei das längliche Implantatanalogon (20) einen Stoppabschnitt (30) aufweist, der sich zwischen dem ersten (22) und dem zweiten (24) Ende befindet und eine Vorderseite (34) beinhaltet, die von dem ersten Ende (22) weg ausgerichtet ist, wobei das physische Modell (1) eine Grundfläche (2) und einen gegenüberliegenden Zahnfleischteil (3) aufweist, wobei ein Durchgangsloch (10) von der Grundfläche (2) zu dem gegenüberliegenden Zahnfleischteil (3) verläuft, wobei das physische Modell (1) und das längliche Implantatanalogon (20) passende drehbeschränkende Vorderseiten (8, 36) aufweisen, die die Drehung des länglichen Implantatanalogons (20), das in das Loch (10) eingeführt ist, beschränken, wobei der Stoppabschnitt (30) und die Anstoßfläche (14) gegenseitig ergänzend sind, um einen Schnappeingriff zum Beibehalten einer gewünschten Einführungstiefe des länglichen Implantatanalogons (20) in das Loch (10) zu definieren, wobei das physische Modell (1) und das längliche Implantatanalogon (20) dazu konfiguriert sind, Folgendes bereitzustellen: i) für einen umlaufenden Raum (S) zwischen dem physischen Modell (1) und dem länglichen Implantatanalogon (20) innerhalb des Lochs (10) entlang einer Länge (L) des länglichen Implantatanalogons (20), Verlaufen zu einem distalen Abschnitt (40), der von dem Schnappeingriff entfernt ist, und ii) für den distalen Abschnitt (40), das physische Modell (1) in dem Loch (10) zu berühren, um das längliche Implantatanalogon (20) gegen Seitwärtsbewegung in dem Loch (10) zu halten.

11. Verfahren nach Anspruch 10, umfassend den Schritt des Beibehaltens der gewünschten Position, indem ein Stoppabschnitt (30) des Analogons (20), der sich zwischen dem ersten (22) und dem zweiten (24) Ende befindet, schnappend in die innere Anstoßfläche (14) eingreift.

12. Verfahren nach Anspruch 11, wobei der Schnappeingriff das hörbare Signal bereitstellt.

## Revendications

1. Combinaison d'une maquette physique (1) d'une dentition d'un patient (5) et d'un analogue d'implant allongé (20) pour leur insertion dans ladite maquette physique (1) pour simuler un implant dentaire, ledit analogue (20) étant doté d'une première extrémité (22) et d'une deuxième extrémité opposée (24), et étant configuré intérieurement pour s'accoupler avec une partie de fixation d'une reconstitution dentaire (100) devant être finalisée à l'aide de ladite maquette physique (1), ledit analogue (20) possédant une section d'arrêt (30) située entre lesdites première (22) et deuxième extrémités (24), et comprenant une face (34) orientée dans le sens opposé à ladite première extrémité (22), ladite maquette physique (1) possédant une face de base (2) et une partie gingivale opposée (3), un orifice traversant (10) s'étendant de ladite face de base (2) à ladite partie gingivale opposée (3), ladite maquette physique (1) comprenant une face de butée interne (14) dans ledit orifice traversant (10), et ladite maquette physique (1) et ledit analogue (20) possédant des faces de restriction de la rotation correspondantes (8, 36) limitant la rotation dudit analogue (20) inséré dans ledit orifice (10), ladite section d'arrêt (30) et ladite face de butée (14) étant complémentaires afin de définir un encliquetage pour le maintien d'une profondeur d'insertion désirée dudit analogue (20) dans ledit orifice (10), ladite maquette physique (1) et ledit analogue (20) étant configurés pour assurer : i) la présence d'un espace périphérique (S) entre ladite maquette physique (1) et ledit analogue (20), à l'intérieur dudit orifice (10) le long d'une longueur (L) dudit analogue (20), jusqu'à une partie distale (40) éloignée dudit encliquetage, et ii) la mise en contact de ladite partie distale (40) avec ladite maquette physique (1) dans ledit orifice (10), afin de maintenir ledit analogue (20) contre tout mouvement latéral dans ledit orifice (10) ;
ladite deuxième extrémité opposée (24) comprenant une partie de signalisation pour l'émission d'un signal visuel, sonore ou tactile, ledit signal étant émis comme un signal visuel ou tactile par le fait que ladite partie de signalisation se trouve au ras de ladite face de base (2) de ladite maquette physique (1).

2. Combinaison selon la revendication 1, ledit signal étant pourvu lors de la configuration de ladite maquette physique (1) et dudit analogue d'implant allongé (20) de sorte que lorsque ledit analogue d'implant allongé se trouve à ladite profondeur d'insertion désirée, une face d'extrémité de l'analogue se trouve au ras d'une face de base (2) de la maquette physique, de sorte qu'une personne faisant glisser ses doigts sur la face de base le reconnaisse comme un signal indiquant que l'analogue a atteint la profondeur d'insertion correcte.

3. Combinaison selon une quelconque des revendications 1-2, ladite partie de signalisation à ladite deuxième extrémité opposée (24) dudit analogue (20) émettant un signal tactile pouvant être inspecté à ladite face de base (2) lorsqu'une face d'extrémité (42) dudit analogue (20) se trouve au ras de ladite face de base (2), de sorte qu'une personne faisant glisser ses doigts sur la face de base le reconnaisse comme un signal indiquant que l'analogue a atteint la profondeur d'insertion correcte.

4. Combinaison selon une quelconque des revendications 1-3, ledit analogue (20) présentant une partie d'extrémité à section transversale réduite (50) comprenant ladite deuxième extrémité (24) et ladite partie distale (40), une transition avec ladite partie d'extrémité étant définie par une face de transition (39) orientée vers ladite deuxième extrémité, ladite maquette physique (1) comprenant une autre face de butée interne (12) au sein dudit orifice traversant (10), configuré pour s'accoupler avec ladite face de transition (39).

5. Combinaison selon une quelconque des revendications 1-4, ladite première extrémité (22) et/ou ladite deuxième extrémité (24) comprenant un repère I indiquant, lors de l'alignement avec un repère sur ladite maquette physique (1), le bon alignement rotatif dudit analogue.

6. Combinaison selon une quelconque des revendications 1-5, une face d'extrémité (42) dudit analogue (20) à ladite deuxième extrémité (24) étant visible et au ras de ladite face de base (2) lors du maintien dudit analogue (20) à ladite profondeur d'insertion désirée par ledit encliquetage.

7. Combinaison selon une quelconque des revendications 1-6, ledit encliquetage étant pratiqué à des emplacements distincts sur un pourtour dudit analogue (20), par exemple à un niveau commun le long de la longueur dudit analogue (20).

8. Combinaison selon une quelconque des revendications 1-7, ladite maquette physique (1) étant réalisée avec un matériau plus souple que celui dudit analogue (20).

9. Combinaison selon une quelconque des revendications précédentes, ledit analogue (20) étant réalisé dans un métal comme le titane, ou avec un alliage métallique.

10. Méthode de réalisation d'une combinaison d'une dentition d'un patient (5) et d'un analogue d'implant allongé (20) pour leur insertion dans une maquette physique (1) pour simuler un analogue d'implant dentaire, ladite maquette physique (1) étant utilisée pour la finalisation d'une reconstitution dentaire (100) devant être montée sur ledit implant, ladite maquette physique (1) possédant une face de base (2) et une partie gingivale opposée (3), ladite méthode comprenant les étapes de :
- mise en place d'un analogue d'implant allongé (20) configuré intérieurement pour s'accoupler avec une partie de fixation de ladite reconstitution dentaire (100), ledit analogue d'implant (20) étant doté d'une première extrémité (22) et d'une deuxième extrémité opposée (24), ladite deuxième extrémité opposée (24) comprenant une partie de signalisation pour l'émission d'un signal visuel, sonore ou tactile,
- le scannage de la dentition dudit patient (5) afin d'obtenir une représentation tridimensionnelle de la dentition dudit patient (5), y compris une région d'implant (4) avec ledit implant,
- la génération d'une maquette virtuelle de la dentition dudit patient (5) à partir de ladite représentation tridimensionnelle, avec une région virtuelle de ladite région d'implant (4) représentant l'orientation dudit implant,
- la fabrication, par exemple par une impression tridimensionnelle, sur la base de ladite maquette virtuelle de ladite maquette physique (1) de la dentition dudit patient (5), avec une région physique (4') correspondant à ladite région virtuelle, et possédant un orifice représentant l'orientation et l'accouplement susmentionnés dudit analogue d'implant (20), ladite fabrication comprenant :
- la réalisation dudit orifice en tant qu'orifice traversant (10) s'étendant de ladite face de base (2) à ladite partie gingivale opposée (3), ledit orifice traversant (10) comprenant une face de butée interne (14), et
- l'insertion dudit analogue d'implant (20) dans la direction allant de ladite partie gingivale (3) dans l'orifice traversant (10) jusqu'à une profondeur désirée correspondant à une signalisation désirée par ladite partie de signalisation, ladite partie de signalisation se trouvant à ladite deuxième extrémité (24) dudit analogue (20), une face d'extrémité (42) dudit analogue (20) se trouvant, dans ladite position désirée, au ras de ladite face de base (2), afin que ledit signal tactile puisse être inspecté à ladite face de base (2),
ledit analogue d'implant allongé (20) possédant une section d'arrêt (30) située entre lesdites première (22) et deuxième extrémités (24), et comprenant une face (34) orientée dans le sens opposé à ladite première extrémité (22), ladite maquette physique (1) possédant une face de base (2) et une partie gingivale opposée (3), un orifice traversant (10) s'étendant de ladite face de base (2) à ladite partie gingivale opposée (3),
ladite maquette physique (1) et ledit analogue d'implant allongé (20) comprenant des faces de restriction de la rotation correspondantes (8, 36) limitant la rotation dudit analogue d'implant allongé (20) inséré dans ledit orifice (10), ladite section d'arrêt (30) et ladite face de butée (14) étant complémentaires afin de définir un encliquetage pour le maintien d'une profondeur d'insertion désirée dudit analogue d'implant allongé (20) dans ledit orifice (10), ladite maquette physique (1) et ledit analogue d'implant allongé (20) étant configurés pour pourvoir : i) un espace périphérique (S) entre ladite maquette physique (1) et ledit analogue d'implant allongé (20) à l'intérieur dudit orifice (10) le long d'une longueur (L) dudit analogue d'implant allongé (20) s'étendant jusqu'à une partie distale (40) éloignée dudit encliquetage, et ii) l'entrée en contact de ladite partie distale (40) avec ladite maquette physique (1) dans ledit orifice (10), afin de maintenir ledit analogue d'implant allongé (20) contre tout mouvement latéral dans ledit orifice (10).

11. Méthode selon la revendication 10, comprenant l'étape de maintien de ladite position désirée par une section d'arrêt (30) dudit analogue (20) située entre lesdites première extrémité (22) et deuxième extrémité (24), encliquetant ladite face de butée interne (14).

12. Méthode selon la revendication 11, ledit encliquetage émettant ledit signal sonore.
